(19) Europäisches Patentamt
European Patent Office
Office européen des brevets

(11) Veröffentlichungsnummer: **0 401 512 B1**

# (12) EUROPÄISCHE PATENTSCHRIFT

(45) Veröffentlichungstag der Patentschrift: **04.01.95**

(21) Anmeldenummer: **90108429.3**

(22) Anmeldetag: **04.05.90**

Die Akte enthält technische Angaben, die nach dem Eingang der Anmeldung eingereicht wurden und die nicht in dieser Patentschrift enthalten sind.

(51) Int. Cl.6: **A23P 1/16, A23G 9/20, A23G 3/02, A23L 3/36, A23G 9/22, A23G 9/28**

(54) **Steuerung für ein Verfahren zum Kühlen von Schäumen, vornehmlich essbarer Schäume.**

(30) Priorität: **05.06.89 DE 3918268**

(43) Veröffentlichungstag der Anmeldung:
**12.12.90 Patentblatt 90/50**

(45) Bekanntmachung des Hinweises auf die Patenterteilung:
**04.01.95 Patentblatt 95/01**

(84) Benannte Vertragsstaaten:
**AT BE CH DK ES FR GB GR IT LI LU NL SE**

(56) Entgegenhaltungen:
**EP-A- 0 223 884        DE-A- 3 905 946
FR-A- 927 946         FR-A- 1 332 452
FR-A- 2 616 043        FR-A- 2 624 347
GB-A- 2 019 187        US-A- 2 132 364
US-A- 2 197 919        US-A- 2 332 211
US-A- 2 713 253        US-A- 3 304 737**

**PATENT ABSTRACTS OF JAPAN, Band 5, Nr. 85 (C-57)[757], 3. Juni 1981;& JP-A-56 29 962 (I. TAKUZOU et al.) 25-03-1981**

(73) Patentinhaber: **HMF KRAMPE & CO. GMBH
Rüsbergstrasse 70
D-58456 Witten (DE)**

Patentinhaber: **Milchhof-Eiskrem GmbH & Co. KG
Seibelstrasse 36
D-40822 Mettmann (DE)**

(72) Erfinder: **Rogge, Friedrich H.F.
Seibelstrasse 40
D-4020 Mettmann (DE)**
Erfinder: **Hoffmann, Ralf
Wilhelmstrasse 44
D-4320 Hattingen/Ruhr (DE)**
Erfinder: **Windhab, Erich, Dr. Dipl.-Ing.
Deichstrasse 30
D-4570 Ouakenbrück (DE)**
Erfinder: **Hoyer, Carl
Grumstolsvej 27
DK-Hojbjerg (DK)**

(74) Vertreter: **Beyer, Rudi
Patentanwalt Dipl.-Ing. Rudi Beyer
Am Dickelsbach 8
D-40883 Ratingen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Steuerung für ein Verfahren zum Kühlen von Schäumen, vornehmlich eßbarer Schäume, bei dem der aufgeschlagene und vorgefrorene Schaum kontinuierlich bis auf -16° C bis -45° C in einem Arbeitsgang auf Lagertemperatur tiefgekühlt und wegtransportiert wird. **Grundsätzliche Überlegungen:**

In weiten Bereichen der Lebensmitteltechnologie werden zum Herstellen von Lebensmitteln bzw. von Genußmitteln Schäume hergestellt. Diese Schäume haben zum einen den Vorteil, daß sie den Genußwert des jeweiligen Produktes erhöhen, zum anderen wird durch das Einschlagen von Luft eine Erhöhung des Volumens vorgenommen.

Zwei klassische Vertreter dieser Lebensmittelschäume sind Schlagsahne und Eiskrem. Bei beiden Produkten wird durch das Einschlagen von Luft das Volumen auf etwa das Doppelte erhöht. Die Feinverteilung der Luftblasen ist sowohl bei Eiskrem als auch bei Schlagsahne ein wesentliches Qualitätskriterium. Bei beiden obengenannten Produkten ist erst eine verzehrsgerechte Form durch dieses Einschlagen von Luft möglich.

- Bei Schlagsahne verbietet der hohe Fettgehalt den Genuß in der ursprünglich flüssigen Form.
- Bei Eiskrem bewirkt das Einschlagen von Luft eine cremige Konsistenz der Eiskrem, da man ohne Lufteinschlag einen hartgefrorenen Block erhält.

Die Technologien zum kontinuierlichen Aufschlagen (Einbringung von Luft) von Schlagsahne und Eiskrem sind weltweit bekannt. Zwar unterscheiden sich die Technologien bei Schlagsahne und Eiskrem wesentlich voneinander, haben jedoch das gleiche Grundprinzip.

Die Verbreitung von tiefgekühlten Produkten und somit auch deren Absatz hat sich in den letzten Jahren mehr als verdoppelt. Nachdem anfänglich die Tiefkühlung nur zur Frischhaltung von Gemüse eingesetzt wurde, wird heute die gesamte Lebensmittelpalette bereits als Tiefkühlware für die Bereiche der Frischwaren angeboten. Von der Tiefkühlung von Gemüse geht der Verbreitungsweg der Tiefkühlkost heute über Fertiggerichte bis hin zu Konditortorten. In diesem Tiefkühlkostbereich nimmt Eiskrem eine wesentliche Stellung ein, wobei für Eiskrem ausschließlich dieser Vermarktungsweg über eine geschlossene Tiefkühlkette möglich ist. Seit ungefähr 15 Jahren versucht die Industrie, Konditortorten auf Schlagsahnebasis als Tiefkühlprodukte zu vermarkten. Stetig steigende Verkaufszahlen auf diesem Sektor belegen die großen Marktchancen in diesem Marktsegment. Die Technologie der Herstellung solcher Tiefkühltorten ist, abgesehen von dem Einsatz von automatischen, kontinuierlichen Aufschlagmaschinen, weitgehend rückständig.

Die Technologie der Eiskremherstellung hat seit der Inbetriebnahme von kontinuierlichen Kühl- oder Gefriergeräten (Freezer) keine gravierenden, technischen Änderungen mehr erfahren. Sieht man von technischen Änderungen, die die Steuerung der Eiskrem-Kühl- oder Gefriergeräte betreffen, ab, so wird hier nach dem gleichen Prinzip noch wie vor 30 Jahren gearbeitet.

**Die heute übliche Arbeitsweise zum Herstellen von tiefgekühlten Torten**

Der mit Zucker versetzten Schlagsahne wird ein geeignetes Geliermittel hinzugefügt. Danach wird diese Schlagsahne pasteurisiert und in Reifetanks für etwa 24 Stunden bei +5° C gereift. Mittels einer Förderpumpe wird die Sahne der kontinuierlich arbeitenden Aufschlagmaschine zugeführt. Gleichzeitig wird diese Aufschlagmaschine mit Druckluft versorgt. Beide Medien werden mit einem Rotor-Stator-Prinzip miteinander vermengt, wobei die Schlagsahne Luft aufnimmt.

Beim Schlagen von Sahne entsteht ein 3-Phasen-System, nämlich die Luft-, Fett- und Serumsphase.

In diese Emulsion werden Luftblasen eingeschlagen (verschäumt). Hierbei wird ein Teil der Fettkügelchen zerstört. Das Fett liegt bei tiefen Temperaturen teilweise in fester, auskristallisierter Form vor, wobei aber ein kleiner Teil des Fettes noch in flüssiger Form in Fettkügelchen eingeschlossen ist. Durch die mechanische Einwirkung des Rotor-Stator-Systems kommt es zu einem Zerstören dieser Fettkügelchen. Dabei tritt ein Teil des freien Fettes aus. Die angeschlagenen und die intakten Fettkügelchen lagern sich dann an die Grenzfläche Luft/Serum an. Dabei ragen Teile von Fettkügelchen aus den monomolekularen Schichten kristallinen Fettes aufgrund der hydrophoben Eigenschaften in die Innenseite der Luftblasen hinein. Freies, flüssiges Fett dient dazu, das erstarrte Fett miteinander zu verbinden. In der Serumsphase nimmt die Anzahl der intakten Fettkügelchen während des Schlagens (Verschäumens) ab. Die Proteine verbleiben in der Serumsphase. Durch diesen Vorgang entsteht ein stabiler Schaum (Schlagsahne). Dieser Schaum wird dann mittels Füllapparaturen schichtweise in Tortenformen eingegeben. Dabei hat dieser Schaum eine Konsistenz, die eine Abfüllung mittels Volumendoseuren noch zuläßt. Die in der Sahne vorhandenen Geliermittel werden erst nach Ablauf einiger Minuten fest, d. h., sie bilden ein Gerüst innerhalb der Schaumstruktur, wobei die Fettkügelchen und die Luftblasen fest justiert werden durch diese gerüstbildenden Geliermittel. Gleichzeitig wird das Wasser an diese Geliermittel gebunden. Nach dem Aufschlagen und Dosieren der Sahne in entsprechende Tortenformen, gelangen diese Torten in einen Härtetunnel zur Tiefkühlung. Bei der Tiefkühlung durchlaufen die Torten einen Luftstrom von etwa -45° C und geben an diesen Luftstrom ihre Wärme ab, so daß sie nach einer Kühlzeit von etwa zwei bis drei Stunden eine Kerntemperatur von -18° C erhalten. Bei diesem relativ langsamen Gefriervorgang friert das im Produkt befindliche Wasser zu größeren Eiskristallen aus. Bei dem Entstehen dieser Eiskristalle wird teilweise das Gerüst, welches vorher durch das Geliermittel gebildet worden ist, zerstört. Ebenso ist es möglich, daß während des Gefrierprozesses wachsende Eiskristalle die in kleinen Bläschen vorhandene Luft anstechen und somit die Membrane dieser Luftblasen zerstören. Dies ist kein wesentlicher Nachteil, solange das Produkt gefroren bleibt, d. h. das Wasser in fester Form im Produkt vorliegt. Beim Auftauen des Produktes verwandelt sich das feste Wasser der Eiskristalle in eine flüssige Wasserphase. Hierbei kommt es zur Konzentration von Wassertröpfchen. Das durch das Geliermittel aufgebaute Gerüst sowie die Emulsion von Luft, Fett und Serum können diese größeren als im Ausgangsprodukt vorhandenen Wasseransammlungen teilweise nicht mehr in das Produkt einschließen, es kommt zu einem Nässen des Produktes beim Auftauen.

Ebenso ist durch den relativ langsamen Gefrierprozeß ein Teil der Luftbläschen zerstört worden. Diese Schäden sind im Produkt irreparabel und führen beim Auftauen des Produktes zu einer Volumenverringerung.

Zwar läßt sich dieses Problem durch eine erhöhte Zugabe von Geliermitteln einigermaßen lösen, jedoch hat der verstärkte Einsatz von Geliermitteln eine geschmackliche Beeinflussung des Produktes zur Folge. Eine Vollmundigkeit der so hergestellten, tiefgefrorenen Schlagsahne ist nach dem Auftauen nicht mehr gegeben. Im Gegensatz zu anderen Lebensmitteln stellt das Tiefgefrieren von aufgeschlagener Sahne mit der zur Zeit vorhandenen Technologie keine Erhaltung der Qualität dar. Im Gegenteil, die Qualität wird durch das Tiefgefrieren noch verschlechtert.

**Herstellung von Speiseeis**

Speiseeisrezepturen bestehen üblicherweise aus Milch, Magermilch, Rahm, Milchkonzentrat, Milchpulver oder Butter, auch Saccharose, Glukose bzw. Dextrose, aus Obsterzeugnissen, die zugesetzt werden können und aus Hydrokolloiden als Stabilisatoren (pflanzliche Bindemittel, Alginate, Carrageenate, Johannisbrotkernmehl und ähnliches).

Zur Herstellung von Speiseeis werden die Einzelbestandteile entsprechend einer vorliegenden Rezeptur gewogen und in ein definiertes Mengenverhältnis gebracht. In einem Mischbehälter werden diese Einzelbestandteile miteinander vermengt. Nach einer fünfzehnminütigen Mischzeit bei 63° C ist diese Vermengung erreicht.

Danach folgt das Pasteurisieren auf 80 bis 85° C, und zwar für 20 bis 40 Sekunden lang.

Nach dieser Wärmebehandlung wird die Mischung abgekühlt auf etwa 70° C und danach in einer zweistufigen Homogenisierungsmaschine homogenisiert und zwar in der ersten Stufe mit 150 und in der zweiten Stufe mit 40 bis 50 bar. Hierbei werden die Fettkügelchen auf unter 2 μm zerkleinert.

Diesem Homogenisierungsvorgang folgt ein Herunterkühlen der Mischung auf 2 bis 4° C. Danach wird diese Mischung in Tanks gebracht, um nach einer Reifezeit von 2 bis 24 Stunden zur weiteren Verwendung zur Verfügung zu stehen. Diese Reifezeit bewirkt, daß die Hydrokolloide quellen, das Casein hydratisiert und die Viskosität erhöht wird, wobei sich das Gefüge des Speiseeises verfeinert. Gleichzeitig werden Schmelzwiderstand und Aufschlag verbessert, das Fett kristallisiert aus und ein ausgeglichenes Aroma bildet sich.

Nach Beendigung des Reifevorganges wird diese Mischung dem Kühl- oder Gefriergerät zum Gefrieren und zum gleichzeitigen Lufteinschlag (Verschäumen) zugeführt.

Industriell werden heute die Mischungen für Speiseeis in kontinuierlich arbeitenden Kühl- oder Gefriergeräte (Freezer) teilweise gefroren. Dabei rotiert innerhalb eines verchromten Rohres eine Messerwelle aus Chrom-Nickel-Stahl mit einer Drehzahl von etwa 200 U/min. Die Messer schaben dabei einen dünnen, an der gekühlten Rohrinnenwand sich bildenden Eisfilm kontinuierlich ab und sorgen außerdem noch für eine innige Vermischung der in diesem Zylinder eingeführten Luft.

Zum Kühlen des Zylinders wird von außen in der Regel Frigen (eingetragenes Warenzeichen) oder Amoniak in einem Temperaturbereich von -25 bis -30° C eingesetzt. Die gewünschten kleinen Eiskristalle erfordern schnelles Gefrieren, welches durch die stark unterkühlte Zylinderinnenwandung möglich ist.

Die Mischung tritt mit einer Temperatur von etwa 4° C in den Gefrierzylinder ein, nachdem ihr die für den Aufschlag erforderliche Luftmenge zudosiert worden ist. Bei einem üblichen Innendruck im Zylinder von etwa 3 bis 5 bar wird die Luft in die Mischung eingeschlagen. Gleichzeitig findet der Gefrierprozeß statt, und das Eis verläßt pastenförmig das Kühl- oder Gefriergerät.

Die mit diesem Verfahren zu erreichenden Temperaturen sind bis maximal -8° C möglich.

Das so hergestellte Eis wird in Bechern oder in Hörnchen abgefüllt. Diese Produkte müssen dann einem Nachgefrierprozeß unterzogen werden, um die Lagertemperatur von -20° C zu erreichen. Wird diese Nachkühlung nicht durchgeführt, so bilden sich die im Eis vorhandenen Wassereiskristalle größer aus, wodurch das Eis rauh und sandig schmeckt. Die zur Zeit auf dem Markt befindlichen Eiskrem-Kühl- oder Gefriergeräte lassen keine tieferen Temperaturen als -8° C zu.

## Zusammenfassung des relevanten Standes der Technik

Bei der Herstellung von Eiskrem können nach den vorbekannten Verfahren Eiskremschäume hergestellt und bis zu einem Bereich von -7° C gefroren werden. Diese Temperatur stellt jedoch keine Lagertemperatur dar. Vielmehr wird die Lagertemperatur von -20° C erst durch die Nachhärtung in Tiefkühltunneln erreicht. Zum Durchführen dieser Verfahrensweise sind hohe Investitionskosten, insbesondere für den Tiefkühltunnel, erforderlich. Außerdem sind die ständigen Energiekosten beträchtlich.

Auf dem Gebiete der Schlagsahneherstellung sind Aufschlagverfahren vorbekannt, die ausschließlich im Temperaturplusbereich arbeiten. Hier ist ein Gefrieren von Schlagsahneschäumen vollkommen unbekannt.

Durch die JP-A-56 29962 ist ein Verfahren vorbekannt, bei welchem zwei Zylinder vorgesehen sind. In dem ersten Zylinder ist eine Aufschlagvorrichtung mit einem den ersten Zylinder umgebenden äußeren Kühlmantel vorgesehen, wobei an dem einen Ende Rohmaterial in den Zylinder und Gas über getrennte Zuleitung eingeleitet wird. Der Zylinder besitzt an seinem Ende eine Auslaßöffnung, die mit dem zweiten Zylinder verbunden ist. Dieser Zylinder besitzt ebenfalls eine Aufschlagvorrichtung mit einem den Zylinder umgebenden Kühlmantel und einer Auslaßöffnung. Das Rohmaterial wird im ersten Zylinder auf etwa -10° C und im zweiten Zylinder auf -20° C bis etwa -40° C abgekühlt. Die so hergestellte Eiskrem wird in geeignete Gefäße eingefüllt.

Die GB-A-2 019 187 beschreibt ein Verfahren zum Herstellen von Eiskrem, bei dem in einem ersten Schritt das Rohmaterial beaufschlagt und auf eine Temperatur von etwa -8° C bis -13° C abgekühlt wird.

Bei der FR-A-2 616 043 werden als wandschabende Werkzeuge zusätzliche Messer, welche am Schneckenaußenradius installiert sind, eingesetzt. Eine derartige "Einschnecken-Konfiguration" ist nicht in der Lage, tiefgefrorene hochkonsistente Stoffsysteme homogen durchzumischen und zu fördern, da die Gefahr der Ausbildung eines rotierenden Materialpropfens gegeben ist, sobald das zu gefrierende Medium eine deutliche Fließgrenze ausbildet (bei Speiseeis ab ca. -5° C). Dies hat zur Folge, daß kein ausreichender Materialaustausch im Schneckenkanal mehr gewährleistet ist (Zusetzen des Schneckenkanals). In der Folge wird eine achsiale Materialförderung nur aufgrund eines über die Länge des Gefrierelementes wirksamen Druckgradienten im "Wandscherspalt" zwischen Schneckenaußendurchmesser und Zylinderinnendurchmesser möglich sein. Dies führt zu einem äußerst unvorteilhaften Verweilzeitspektrum mit extrem langer Verweilzeit im Schneckenkanal und deutlich kürzerer Verweilzeit im beschriebenen "Wandscherspalt". Die eingesetzten Aufschlagelemente sind im wesentlichen horizontale dynamische Mischer, welche als zusätzliches Mischelement eine Lochscheibe besitzen. Mittels derartiger Einrichtungen ist nur eine relativ grobdisperse Aufschäumung einer fluiden Grundmatrix möglich. Nur bei einer möglichst großen Anzahl von Rotor-Stator-Scherspalten ist eine für die Stabilität aufgeschäumter Produkte extrem wichtige Feindispersität (mittlere Blasengrößen zum Beispiel in Eiskrem < 30-50 μ) erzielbar. Insbesondere dann, wenn wie im beschriebenen Fall die Aufschlageinheit bei 2° C bis 4° C arbeiten soll, besteht eine erhöhte Entmischungsgefahr eines Gas/Fluid-Systems, sofern nicht eine Feinstdispergierung in allen Zonen des Aufschlagapparates gewährleistet ist. In der FR-A-2 616 043 sind die beschriebenen Steuer-/Regelkreise darauf abgestimmt, eine Durchsatz und "Struktur"-Konstanz des Produktes durch entsprechende Dosierung bzw. evtl. thermische Beeinflussung zu erreichen. Keiner der aufgezeigten Regelkreise läßt eine Veränderung der Produktverweilzeit im "strukturgebenden" Gefrierelement bei gleichbleibendem Durchsatz zu ohne die Produktzusammensetzung zu verändern.

Weitere Verfahren zum Kühlen von eßbaren Schäumen sind in den Druckschriften US-A-27 13 253, US- A-33 04 737, US-A-21 32 364 und DE-A-39 05 946 beschrieben.

## Aufgabe

Der Erfindung liegt die Aufgabe zugrunde, eine Steuerung für ein Verfahren zum Kühlen von Schäumen, vornehmlich eßbarer Schäume, zu schaffen, bei der es mit relativ geringen Energiekosten möglich ist, eßbare Schäume, also nicht nur Eiskrem, sondern auch z. B. Schlagsahne, während und/oder im unmittelbaren Anschluß nach dem Aufschlagen im gleichen Arbeitsgang auf Lagertemperatur, also auf z. B. -20° C, lagerungsfertig tiefzufrieren.

Die Aufgabe wird durch die in **Patentanspruch 1** wiedergegebenen Merkmale gelöst.

Bei Anwendung der erfindungsgemäßen Steuerung ist es zunächst erstmals möglich im gleichen Arbeitsgang eßbare Schäume, also nicht nur Eiskrem, sondern auch z. B. Schlagsahne, während und/oder im unmittelbaren Anschluß nach dem Aufschlagen im gleichen Arbeitsgang auf Lagertemperatur, also auf z. B. -20° C, zu kühlen. Dadurch kann z. B. das in Schlagsahne oder dergleichen befindliche Wasser durch extrem schnelles Herunterkühlen zu Eiskristallen unter 20 bis 30 $\mu$m gefroren werden. Bei einer Eiskristallgröße von 20 bis 30 $\mu$m ist die Gefahr, daß das Produkt nach dem Auftauen näßt, erheblich geringer. Ebenso ist die Luftverteilung in dem Produkt stabiler, da bei einer solchen Eiskristallgröße eine Verletzung der Luftblasen nicht denkbar erscheint.

Bei Anwendung eines solchen, schnellverlaufenden Gefrierprozesses kann die Vollmundigkeit der Schlagsahne erhalten bleiben, der Anteil an Geliermitteln kann verringert werden, wobei die Annäherung an ein frisch hergestelltes Produkt erheblich größer ist. Schließlich wird durch die nicht vorhandene Volumenreduzierung ein formstabiles Produkt erreicht, was z. B. für die Herstellung von Torten von großem Vorteil ist.

Durch die Kombination eines Aufschlag- und Gefrierverfahrens ist es somit erstmalig möglich, beispielsweise Schlagsahne kontinuierlich aufzuschlagen und gleichzeitig tiefzugefrieren. Ein Nachgefrieren von Sahneprodukten in einem Härtetunnel mittels Kaltluft bei etwa -45° C ist damit nicht mehr notwendig. Da bereits im Herstellungsprozeß die für Tiefkühlprodukte notwendige Mindesttemperatur von -18° C oder noch weniger erreicht wird, ist somit in jedem Fall ein anschließender Gefrierprozeß entbehrlich geworden.

Außerdem läßt sich bei Anwendung der erfindungsgemäßen Steuerung eine Feinstverteilung von Wasserkristallen erreichen. Bei Anwendung der erfindungsgemäßen Steuerung lassen sich somit Lebensmittelschäume auch auf anderer Basis als auf Schlagsahne herstellen und durch den Gefrierprozeß in eine haltbare Form bringen. Denkbar sind hier Fruchtschäume wie z. B. aufgeschlagenes Bananenpüree, und andere Milchprodukte, wie z. B. Fruchtjoghurte oder dergleichen.

Durch Anwendung der erfindungsgemäßen Steuerung lassen sich vollkommen neue Lebensmittel in leichter, energie- bzw. brennwertarmer Art hervorbringen, die der modernen Ernährungsphysiologie angepaßt sind. Solche Systeme und Verfahrensweisen sind weltweit nicht bekannt. Hierdurch lassen sich vollkommen neue Absatzchancen eröffnen.

Auch bei der Herstellung von Eiskremmassen lassen sich diese bei Anwendung der erfindungsgemäßen Steuerung so aufschlagen und gleichzeitig oder unmittelbar anschließend kontinuierlich gefrieren, daß sie keiner Nachhärtung mittels Kaltluft von -45° C mehr bedürfen, um die endgültige Lagertemperatur von z. B. -18° C bzw. -20° C zu erreichen. Durch die erfindungsgemäße Steuerung entfällt der Arbeitsprozeß des Nachhärtens von Eiskrem vollständig, wodurch ein kontinuierlicher Prozeßablauf des Gefrierens und Abfüllens möglich wird, so daß die so hergestellten Produkte unmittelbar nach ihrer Abfüllung versandfertig sind.

Der Abkühlungsprozeß (Nachhärtung) auf -20° C mittels Kaltluft ist vom Anlagenbau - wie oben ausgeführt - an sich sehr investitionsintensiv, und es werden sehr große Abkühlzeiten benötigt, da das durchschnittliche Gefrieren eines Eisproduktes von 5° C auf -20° C nur 1 cm/h voranschreitet, wodurch z. B. ein 6 cm großer Eiswürfel mindestens eine Behandlungszeit mit Kaltluft von drei Stunden benötigt, um eine Kerntemperatur von -20° C zu erzielen. Neben diesen zeit- und anlagenintensiven, vorbekannten Verfahren tritt noch eine Schädigung des Produktes auf. Bei einer Temperatur von -5 bis -7° C ist nur 45 bis 63 % des vorhandenen Wassers ausgefroren. Die restlichen 40 %, abzüglich von ca. 5 % Wasser, verbleiben immer als sogenanntes "freies Wasser" im Produkt. Diese 35 % gefrieren erst im Nachhärtungsprozeß. Dabei lagert sich dieses Wasser an die schon vorhandenen Wasserkristalle an und bewirkt ein Vergrößern dieser Kristalle. Je größer die Wasserkristalle sind, desto weniger cremig schmeckt das Speiseeis. Durch die Nachhärtung und dem damit verbundenen Wachsen der Eiskristalle ist gleichzeitig auch noch eine Verschlechterung der Struktur des Speiseeises gegeben. Die Struktur verändert sich von cremig weich hin zu hart, bröckelig im extremen Fall.

Alle diese Nachteile werden bei Anwendung der erfindungsgemäßen Steuerung vollkommen vermieden.

Obwohl es sich bei den Ausgangsmaterialien von vornehmlich Schlagsahne und Eiskrem um zwei eigenständige Lebensmittel handelt, läßt sich die grundsätzliche Problemstellung, nämlich Schäume durch Aufschlagen herzustellen und zu gefrieren bis zu einem Temperaturbereich, bei dem sie lagerfähig sind, bei der erfindungsgemäßen Steuerung ohne Schwierigkeiten lösen.

Somit ist es bei Anwendung der erfindungsgemäßen Steuerung erstmals möglich, gefrorene Schäume bis -18 bis -20° C in einem Arbeitsgang mit Aufschlagen herzustellen und kontinuierlich versandfertig abzuziehen.

Ein besonderer Vorteil besteht auch darin, daß die Energiekosten gegenüber mit Nachhärtetunneln arbeitenden Anlagen bei der Eiskremherstellung bei der erfindungsgemäßen Steuerung um etwa z. B. 30 % oder noch niedriger liegen, so daß die erfindungsgemäße Steuerung besonders wirtschaftlich arbeitet.

Der belüftete und gefrorene Schaum verläßt die Anlage kontinuierlich. Sämtliche Parameter zur Herstellung dieses Schaumes sind steuerbar wie z. B. Austrittstemperatur, Menge der eingebrachten (eingeschlagenen) Luft, Gefriergeschwindigkeit usw. Durch die Steuerung hält sich die Einrichtung zur Anwendung der erfindungsgemäßen Steuerung selbst in einem prozeßstabilen Zustand.

Das zu verschäumende Produkt kann mit Luft von z. B. 12° C aufgeschlagen werden. Das so verschäumte Produkt wird in einem Kühl- oder Gefriergerät auf z. B. -5° C heruntergekühlt und dadurch der Schaum vorgefroren. Der so vorgefrorene Schaum wird in einer geeigneten Fördervorrichtung auf z. B. -20° C weiter abgekühlt. Die Vorrichtungsteile können in einem Bauelement vereinigt sein. Ein Tiefgefriertunnel entfällt bei der erfindungsgemäßen Einrichtung vollkommen.

Bei der Erfindung wird das zu verschäumende Produkt in einer Vorrichtung aufgeschlagen, in der das verschäumte Produkt entweder gleichzeitig oder unmittelbar nach dem Verlassen der Schaumherstellungsvorrichtung in mindestens einer sich anschließenden Tiefkühlvorrichtung heruntergekühlt und durch eine Extruderschnecke ausgetragen und sofort weiterverarbeitet wird. Der aus dem Extruder austretende Schaum ist versandfertig und braucht nicht "nachgehärtet" zu werden.

Es können auch mehrere Extrudervorrichtungen parallel und/oder hintereinander geschaltet werden. Zum Beispiel ist es möglich, mehrere Extruder im Co-Extrusionsprozeß arbeiten zu lassen.

Das der Aufschlagvorrichtung zugeführte Produkt kann vorgekühlt werden. Es ist auch möglich, der Vorrichtung vorgekühlten Schaum zuzuführen und diesen Schaum auf die Lagertemperatur in der Extrudervorrichtung oder in einem oder mehreren der mit der Extrudervorrichtung verbundenen Vorrichtungsteile bis auf die Lagertemperatur herunterzukühlen.

Die Erfindung ermöglicht es, in der ersten Stufe etwa 80 % Luft einzuschlagen, um ein feincremiges Gemisch zu erreichen. Ein Nachnässen ist dadurch ausgeschlossen.

In der Zeichnung ist die Erfindung - teils schematisch - beispielsweise veranschaulicht. Es zeigen:

Fig. 1    in schematischer Darstellung einen erfindungsgemäßen Verfahrensgang;

Fig. 2    eine Einzelheit aus Fig. 1, in größerem Maßstab, teils im Schnitt und

Fig. 3    eine weitere Ausführungsform der Erfindung, teils im Schnitt.

Mit dem Bezugzeichen 1 ist eine Aufschlagvorrichtung bezeichnet, in der das zu verschäumende Produkt unter Hinzumischung von z. B. Luft verschäumt wird. In der Aufschlagvorrichtung 1 kann der Schaum z. B. eine Temperatur von 12° C aufweisen.

Der so hergestellte Schaum verläßt die Aufschlagvorrichtung 1 in Pfeilrichtung und wird einem Kühl- oder Gefriergerät (Freezer) 2 zugeführt, in dem der Schaum auf z. B. -5,5° C heruntergekühlt wird. Der so vorgefrorene Schaum 10 verläßt das Kühl- oder Gefriergerät 2 in Pfeilrichtung und wird einer kombinierten Extrudervorrichtung 3 zugeführt. In der Extrudervorrichtung 3 wird der vorgefrorene eßbare Schaum auf z. B. -20° C lagerfertig heruntergekühlt und verläßt kontinuierlich die kombinierte Extrudervorrichtung 3 als lagerfertiges Produkt 4 (Schaum).

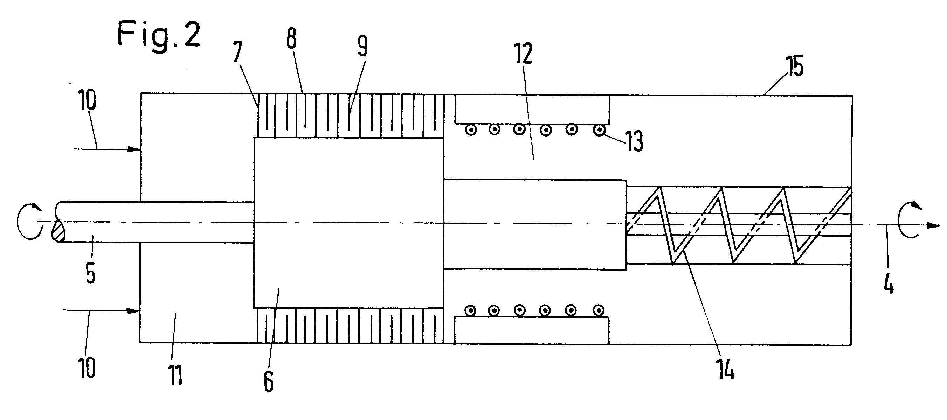

In Fig. 2 ist die kombinierte Extrudervorrichtung 3 schematisch im Querschnitt veranschaulicht. Das Bezugzeichen 5 bezeichnet eine von einem nicht dargestellten Motor angetriebene Welle, mit der ein Rotor 6 verbunden ist. Der Rotor 6 weist mehrere Schaufeln 7 auf, die mit Abstand mit an einem Stator 8 angeordneten Schaufel 9 kämmen. Der vorgefrorene Schaum 10 wird einer Kammer 11 und damit auch den Schaufeln 7 und 9 zugeführt. In diesem Bereich können geeignete Kühlvorrichtungen angeordnet sein, die den vorgefrorenen Schaum 10 weiter herunterkühlen. Der weiterhin innig durchgemischte Schaum wird in einer anschließenden Kühlvorrichtung 12 bis auf Lagertemperatur von z. B. -20° C heruntergekühlt. Kühlschlangen 13 sind in Fig. 2 schematisch angedeutet. Der lagerfertig gekühlte Schaum wird durch eine Extruderschnecke 14 kontinuierlich aus der Vorrichtung abgefördert. Die Extruderschnecke 14 ist an ihrem der Welle 5 entgegengesetzten Endabschnitt in einem lediglich schematisch angedeuteten Gehäuse 15 gelagert und kann durch den gleichen Motor wie die Welle 5 mit angetrieben werden.

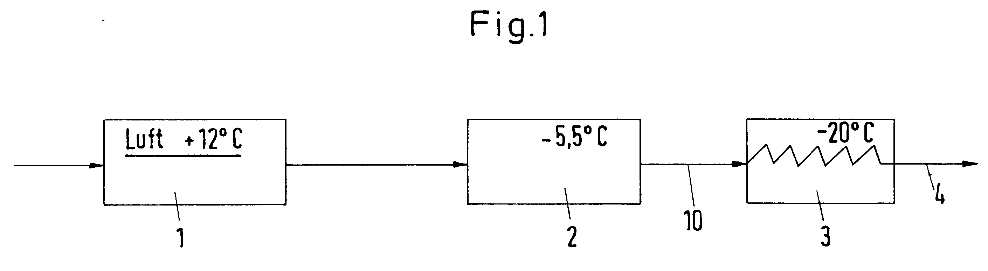

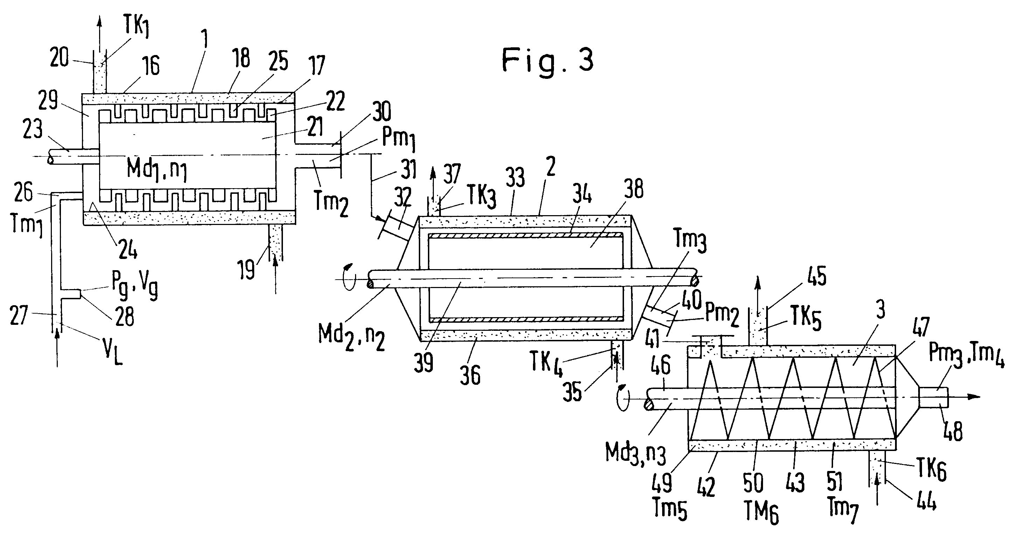

In Fig. 3 ist eine weitere Ausführungsform der Erfindung beschrieben, die eine detailliertere Ausarbeitung der aus Fig. 1 ersichtlichen Ausführungsform darstellt.

Mit dem Bezugzeichen 1 ist die Aufschlagstufe bzw. Aufschlagvorrichtung, mit 2 die Vorgefrierstufe bzw. das Kühl- oder Gefriergerät und mit 3 die Tiefgefrierstufe bzw. die kombinierte Extrudervorrichtung bezeichnet. Die Aufschlagvorrichtung besteht im wesentlichen aus einem Gehäuse 16, das im Innern ein weiteres rohrförmiges Gehäuse 17 aufweist, das zu dem äußeren Gehäuse 16 koaxial angeordnet ist, so daß zwischen äußerem und innerem Gehäuse 16 und 17 ein Ringraum 18 verbleibt, an dem an dem einen Ende eine Kühlmittelzufuhrleitung 19 und an dem anderen Ende ein Kühlmittelabflußstutzen 20 angeschlossen sind. Der Kühlmittelabflußstutzen 20 ist mit einer geeigneten, nicht dargestellten Leitung verbunden.

Der Ringraum 18 wird somit von Kühlmittel durchströmt. Als Kühlmittel kann eine geeignete Sole, Frigen (eingetragenes Warenzeichen) oder dgl. in Betracht kommen.

In dem inneren rohrförmigen Gehäuse ist ein Rotor 21 mit zahlreichen über seinen Umfang und seine Länge verteilten Schaufeln 22 angeordnet, der über eine Welle 23 durch einen nicht dargestellten Motor angetrieben wird.

An der Innenwandung 24 des inneren Gehäuses 17 sind über den Umfang und über die Länge ebenfalls zahlreiche Schaufeln 25 angeordnet, die mit den Schaufeln 22 mit Spaltabstand kämmen.

Auf der einen, der Welle 23 zugekehrten Stirnseite des Gehäuses 16 ist eine Zufuhrleitung 26 angeschlossen. An das eine Ende 27 dieses L-Stückes der Zufuhrleitung 26 wird das betreffende Fluid, also die Ausgangskomponenten des zu verschäumenden Mediums, zugeführt, während durch das Rohrstück 28 in die Zufuhrleitung 26 ein geeignetes Verschäumungsgas, in der Regel Luft, zugeführt wird. Fluid und Trägergas bzw. Luft treten also in den Innenraum 29 und werden durch die Schaufeln 22 und 25 innig miteinander verschäumt. Die in dieser Aufschlagvorrichtung 1 vorgeschäumten Stoffe verlassen über den Rohrstutzen 30 die Aufschlagvorrichtung 1 in Richtung des Pfeiles 31 und werden in einen Rohrstutzen 32 eingebracht, der an ein Gehäuse 33 des Kühl- oder Gefriergerätes angeschlossen ist.

Beim Durchströmen der Aufschlagvorrichtung 1 werden Fluid und Trägergas vorgekühlt, wobei - wie in allen anderen Stufen, also Aufschlagvorrichtung 1, Kühl- oder Gefriergerät 2 und Tiefgefrierstufe 3 - Kühlmittel und Fluid sich im Gegenstrom zueinander bewegen.

In dem Kühl- oder Gefriergerät 2 strömt der Schaum durch einen Ringraum 34, der außen von Kühlmittel umspült ist, das über eine Zufuhrleitung 35 in einen Ringraum 36 eingegeben wird und diesen Ringraum 36 über eine Abflußleitung 37 wieder verläßt.

Koaxial zu den Ringräumen 34, 36 ist ein Rotor 38 angeordnet, der über eine Welle 39 motorisch angetrieben ist.

Der vorgefrorene Schaum wird über einen Stutzen 40 abgeführt und über einen Anschlußstutzen 41 einem Gehäuse 42 der Tiefgefrierstufe zugeführt.

Das Gehäuse 42 der Tiefgefrierstufe weist wiederum einen Ringraum 43 auf, an dem eine Leitung 44 zum Zuführen des Kühlmittels angeschlossen ist. Das Kühlmittel verläßt über eine Leitung 45 den Ringraum 43.

Koaxial zum Ringraum 43 ist eine über eine Welle 46 motorisch angetriebene Förderschnecke 47 angeordnet, die den tiefgefrorenen Schaum durch einen Stutzen 48 austrägt. Der tiefgefrorene Schaum wird dann in geeigneter Weise weiterverarbeitet, verpackt und abtransportiert.

Mit den Bezugszeichen 49, 50 und 51 sind Thermoelemente bezeichnet, mit denen die Temperaturen des tiefgefrorenen Schaumes an verschiedenen Stellen in der Tiefgefrierstufe meßbar sind.

In Fig. 3 wurde mit $V_L$ der Volumenstrom des zugeführten Fluids, mit $V_g$ der Volumenstrom des zugeführten Trägergases, mit $P_g$ der Druck des zugeführten Trägergases an dem Rohrstück 28, mit $Tm_1$ die Temperatur in der Zufuhrleitung 26, $Md_1$ das Drehmoment an der Welle 23, mit $n_1$ die Drehzahl der Welle 23, mit $TK_1$ die Temperatur im Kühlmittelabflußstutzen 20, mit $Pm_1$ der Druck im Rohrstutzen 30, mit $Tm_2$ die Temperatur im Rohrstutzen 30, mit $TK_2$ die Temperatur in der Kühlmittelzufuhrleitung 19, mit $TK_3$ die Temperatur in der Abflußleitung 37, mit $Md_2$ das Drehmoment an der Welle 39, mit $n_2$ die Drehzahl der Welle 39, mit $TK_4$ die Temperatur in der Zufuhrleitung 35, mit $Pm_2$ der Druck im Stutzen 40, mit $Tm_3$ die Temperatur im Stutzen 40, mit $Md_3$ das Drehmoment an der Welle 46, mit $n_3$ die Drehzahl der Welle 46, mit $Tm_5$, $Tm_6$ und $Tm_7$ die durch die Thermoelemente 49, 50 und 51 jeweils gemessenen Temperaturen der tiefgefrorenen Schäume in der Tiefkühlstufe, mit $TK_6$ die Temperatur in der Leitung 44, mit $Pm_3$ der Druck im Stutzen 48 und mit $Tm_4$ die Temperatur im Stutzen 48 bezeichnet.

Mit den Bezugszeichen 19, 20, 35, 37, 44 und 45 sind für die einzelnen Prozeßstufen der jeweilige Kühlmittelzu- und -abflüsse gekennzeichnet. Die an den entsprechenden Stellen gemessenen Kühlmitteltemperaturen sind mit $TK_1$ bis $TK_6$ gezeichnet. Diese Temperaturen werden durch Thermoelemente an den entsprechenden Stellen gemessen.

Weitere Temperaturmessungen erfolgen beim jeweiligen Masseaustritt aus den einzelnen Prozeßstufen, Bezugszeichen 20, 40 bzw. 48, Temperaturen $Tm_2$, $Tm_3$, $Tm_4$. An denselben Stellen wird ferner eine Druck- bzw. Druckdifferenzmessung zur Konsistenzermittlung (viskoser Druckabfall) gemessen ($Pm_1$, $Pm_2$ bzw. $Pm_3$).

Für die Antriebsaggregate der einzelnen Prozeßstufen, Bezugszeichen 1 bis 3, erfolgt eine Leistungs- bzw. Drehmomentmessung $Md_1$ bis $Md_3$ und Drehzahlmessungen $n_1$ bis $n_3$.

Für die zudosierten Ausgangskomponenten (Fluid, Gas) wird sowohl der Volumenstrom $V_L$ und $V_g$ bei 27 und 28 sowie für das Gas der Dosierdruck $P_g$ bei 28 und für die Mischung aus den Ausgangskomponenten bei Position 26 die Mischungstemperatur $Tm_1$ ermittelt.

7

In der letzten Prozeßstufe (Tiefgefrierstufe) wird zur Kontrolle des Temperaturprofils über die Länge der Prozeßstufe zusätzlich an drei Stellen die Massetemperatur der in dieser Prozeßstufe tiefzugefrierenden Masse bestimmt ($Tm_5$ bis $Tm_7$).

Zielgrößen beim Herstellungsprozeß tiefgefrorener Schaummassen sind die Massetemperatur $Tm_4$ am Austritt der Tiefgefrierstufe und der an dieser Stelle gemessene Druck bzw. Differenzdruck $Pm_3$ (viskoser Druckverlust), welche ein Maß für die Konsistenz der aus der Anlage austretenden tiefgefrorenen Schaummatrix sind. Zur Erreichung der definierten Zielgrößen sind folgende Vorgabeparameter nach den Erfahrungen der Rezepturentwicklung einzustellen und in ihrer Konstanz zu kontrollieren bzw. zu regeln: Fluid- und Gasvolumenstrom $V_L$ und $V_g$, Gasdruck $P_L$, die Leistungsdaten der Antriebsaggregate $Md_1$ bis $Md_3$ und $n_1$ bis $n_3$ sowie die Eintrittstemperaturen des Kühlmediums in die einzelnen Prozeßstufen $TK_2$; $TK_4$; $TK_6$ und die Eintrittsgemischtemperatur $Tm_1$ bei 17 als auch der Gegendruck in der Aufschlagstufe $Pm_1$.

Als reine Kontrollparameter werden die Kühlmittelaustrittstemperaturen aus den einzelnen Prozeßstufen $TK_1$; $TK_3$; $TK_6$ sowie die Massetemperaturen $Tm_2$, $Tm_3$, $Tm_4$, $Tm_5$, $Tm_6$ und $Tm_7$ und der Austrittsdruck $Pm_2$ aus der Vorgefrierstufe ermittelt.

Die maßgeblichen Regelgrößen für den Schaumaufschlag sind die Volumenströme von Gas und Fluid $V_g$, $V_L$, maßgeblich für die Einstellung der Konsistenz - Zielgrößen $Pm_3$; $Tm_4$ - sind die Leistungseinträge in den einzelnen Prozeßstufen $Md_1$ bis $Md_3$; $n_1$ bis $n_3$ sowie die Geschwindigkeit des Kühlvorganges in der Tiefgefrierstufe, welche im wesentlichen durch die Eintrittstemperatur des Kühlfluids $TK_6$; Bezugszeichen 44 bestimmt wird.

---

## Bezugszeichenliste

---

1    Aufschlagvorrichtung

2    Kühl- oder Gefriergerät (Freezer)

3    Vorrichtung zum Transportieren und Tiefgefrieren ,

      kombinierte Extrudervorrichtung, Tiefgefrierstufe

4    Schaum, Produkt

5    Welle

6    Rotor

7    Schaufeln

8    Stator

9    Schaufeln

10    Schaum, vorgefroren

11    Kammer

12    Kühlvorrichtung

13    Kühlschlangen

14    Extruderschnecke, Schnecke

15    Gehäuse, rohrförmiges

16       "    ,      "

17       "    , inneres

18    Ringraum

19    Kühlmittelzufuhrleitung

| 20 | Kühlmittelabflußstutzen |
|----|-------------------------|
| 21 | Rotor |
| 22 | Schaufel |
| 23 | Welle |
| 24 | Innenwandung |
| 25 | Schaufel |
| 26 | Zufuhrleitung |
| 27 | Ende |
| 28 | Rohrstück |
| 29 | Innenraum |
| 30 | Rohrstutzen |
| 31 | Pfeilrichtung |
| 32 | Rohrstutzen |
| 33 | Gehäuse |
| 34 | Ringraum |
| 35 | Zufuhrleitung |
| 36 | Ringraum |
| 37 | Abflußleitung |
| 38 | Rotor |
| 39 | Welle |
| 40 | Stutzen |
| 41 | Anschlußstutzen |
| 42 | Gehäuse |
| 43 | Ringraum |

| | |
|---|---|
| 44 | Leitung |
| 45 | " |
| 46 | Welle |
| 47 | Förderschnecke |
| 48 | Stutzen |
| 49 | Thermoelement |
| 50 | " |
| 51 | " |

| | |
|---|---|
| $Md_1$ | Drehmoment an der Welle 23 |
| $Md_2$ | Drehmoment an der Welle 39 |
| $Md_3$ | Drehmoment an der Welle 46 |

| | |
|---|---|
| $n_1$ | Drehzahl der Welle 23 |
| $n_2$ | Drehzahl der Welle 39 |
| $n_3$ | Drehzahl der Welle 46 |

| | |
|---|---|
| $P_g$ | Druck des zugeführten Trägergases in dem Rohrstück 28 |
| $P_L$ | Gasdruck |

| | |
|---|---|
| $Pm_1$ | Druck im Rohrstutzen 30 |
| $Pm_2$ | Druck im Stutzen 40 |
| $Pm_3$ | Druck im Stutzen 48 |

$Tm_1$    Temperatur in der Zufuhrleitung 26

$Tm_2$    Temperatur im Rohrstutzen 30

$Tm_3$    Temperatur im Stutzen 40

$Tm_4$    Temperatur im Stutzen 48

$Tm_5$    Temperatur am Thermoelement 49

$Tm_6$    Temperatur am Thermoelement 50

$Tm_7$    Temperatur am Thermoelement 51


$TK_1$    Temperatur im Kühlmittelabflußstutzen 20

$TK_2$    Temperatur in der Kühlmittelzufuhrleitung 19

$TK_3$    Temperatur in der Leitung 37

$TK_4$    Temperatur in der Zufuhrleitung 35

$TK_5$    Temperatur in der Leitung 45

$TK_6$    Temperatur in der Leitung 44


$V_L$    Volumenstrom des Fluids am Eingang der Leitung 27

$V_g$    Volumenstrom des Trägergases am Eingang der

Leitung 28


**Patentansprüche**

1.  Steuerung für ein Verfahren zum Kühlen von Schäumen, vornehmlich eßbarer Schäume, bei dem der aufgeschlagene und vorgefrorene Schaum kontinuierlich bis auf -16° C bis - 45° C in einem Arbeitsgang auf Lagertemperatur tiefgekühlt und wegtransportiert wird, **dadurch gekennzeichnet**, daß für die einzelnen Antriebsorgane der einzelnen Prozeßstufen Leistungsmessungen ($Md_1$ - $Md_3$) und Drehzahlmessungen ($n_1$ - $n_3$) vorgenommen werden und daß für die zudosierten Ausgangskomponenten (Fluid, Gas) die Volumenströme des Fluids ($V_L$) und des Gases ($V_g$), die Dosierdrücke ($P_g$) für die Mischung aus den Ausgangskomponenten und die Mischungstemperatur ($Tm_1$) ermittelt werden, und daß in der letzten Prozeßstufe (Tiefgefrierstufe) zur Kontrolle des Temperaturprofils über die Länge der Prozeßstufe zusätzlich an mehreren Stellen die Massetemperaturen ($Tm_5$ - $Tm_7$) der in dieser Prozeßstufe tiefzugefrierenden Masse ermittelt werden, wobei Zielgrößen die Massetemperatur ($Tm_4$) am Austritt der Tiefgefrierstufe sowie der an dieser Stelle gemessene Druck bzw. Differenzdruck ($Pm_3$) sind, wobei als reine Kontrollparameter die Kühlmittelaustrittstemperaturen aus den einzelnen Prozeßstufen sowie die Massetemperaturen ($Tm_2$; $Tm_3$; $Tm_5$ -$Tm_7$) und der Austrittsdruck ($Pm_2$) aus der Vorgefrierstufe ermittelt werden und als maßgebliche Regelgrößen für den Schaumaufschlag die Volumenströme des Gases ($V_g$) und des Fluids ($V_L$) maßgeblich für die Einstellung der Konsistenz sowie die Geschwindigkeit des Kühlvorganges in der Tiefgefrierstufe bestimmt werden.

## Claims

**1.** Control to use a process for cooling foam, particularly edible foam, where the beaten, pre-frozen foam is deep-frozen continuously down to -16 °C to -45 °C in one operation to storage temperature and is conveyed away, **characterized by the fact that** for the individual drive elements of the individual process stages, torque output measurements ($Md_1$ - $Md_3$) and speed of rotation measurements ($n_1$ - $n_3$) are carried out, and that for the metered and added output components (fluid, gas), the volumetric flows of the fluid ($V_L$) and of the gas $V_g$), the metering pressures ($P_g$) for mixing are determined from the output components and the mixing temperature ($Tm_1$), and that in the final process stage (deep-freezing stage), for the purpose of monitoring the temperature profile over the length of the process stage, the material temperatures ($Tm_5$ - $Tm_7$) of the material to be deep-frozen in this process stage are determined, where the target variables are the material temperature ($Tm_4$) at the outlet of the deep-freezing stage, and the pressure or differential pressure ($Pm_3$) measured at this point where, as pure reference parameters, the coolant outlet temperatures from the individual process stages and the material temperatures ($Tm_2$, $Tm_3$, $Tm_5$ - $Tm_7$) and the outlet pressure ($Pm_2$) from the pre-freezing stage are determined and, as definitive controlled variables for foam beating, the volumetric flows of the gas ($V_g$) and of the fluid ($V_L$), definitive for adjusting the consistency and the rate of the cooling process in the deep-freezing stage, are determined.

## Revendications

**1.** Régulation pour la mise en oeuvre du procédé de refroidissement de mousse, en particulier de mousse mangeable, dans lequel la mousse battue et prégelée est surgelée en continu en une opération de -16 à -45° C pour la porter à la température de stockage puis évacuée, caractérisée en ce que des mesures de débit ( Md1 - Md3 ) et de nombres de tours ( n1 - n3 ) sont effectuées pour chaque organe d'entraînement de chaque étage processuel et que sont déterminés pour les composants de départ rajoutés dosés ( fluide, gaz ) les flux volumiques du fluide ( VL ) et du gaz ( Vg), les pressions de dosage ( Pg ) pour le mélange à partir des composants de départ et la température de mélange ( Tm1 ), et en ce qu'au dernier étage du processus ( étage de surgélation ) les températures ( Tm5 - TM7 ) de la pâte à surgeler à cet étage du processus sont en plus déterminées à plusieurs endroits pour vérifier le profil des températures tout le long de l'étage processuel, les grandeurs-cibles étant la température de la pâte ( Tm4 ) à la sortie de l'étage surgélateur ainsi que la pression mesurée à cet endroit et la pression différentielle ( Pm3 ), les températures du fluide réfrigérant à la sortie de chaque étage processuel ainsi que les températures de la pâte ( Tm2; Tm3; Tm5 - Tm7 ) et la pression de sortie ( Pm2 ) de l'étage présurgélateur étant déterminées purement à titre de paramètres de contrôle et les flux volumiques du gaz ( Vg ) et du fluide ( VL ) étant déterminés comme grandeurs régulatrices de référence pour le battage de la mousse car elles servent de référence à l'ajustage de la consistance de la mousse et à la vitesse de refroidissement de l'étage de surgélation.

Fig.1

Fig.2

Fig. 3